# EUROPEAN PATENT APPLICATION

(11) **EP 3 451 246 A1**
(43) Date of publication of application: **06.03.2019**
(21) Application number: 18184574.4
(22) Date of filing: 19.07.2018
(51) Int. Cl.: G06Q 10/00, G06Q 10/08

(54) **EOL NOTIFICATION GENERATION**

(30) Priority: 28.08.2017 IN 201741030374
(71) Applicant: Hewlett Packard Enterprise Development LP, Houston, TX 77070 (US)
(72) Inventor: GANJAM, Praveen Ramesh, 560048 Karnataka (IN); NAGARAJU, Yashavantha, 560048 Karnataka (IN); MURALEEDHARAN, Vinod, 560048 Karnataka (IN)
(74) Representative: Haseltine Lake LLP

(57) **Abstract**

In one example in accordance with the present disclosure, a system may include a processor and a memory storing end of life information. The end of life information may indicate a date when the network device will no longer be supported. The memory may comprise instructions executable by the processor to determine, based on the end of life information, that an end of life threshold has been reached and to generate a notification that the end of life threshold has been reached, wherein the notification includes the date when the network device will no longer be supported. The memory may also comprise instructions executable by the processor to broadcast the notification on a network accessible by the network device.

## Description

### BACKGROUND

End-of-life (EOL) is a term referring to when a product is no longer supported by a vendor, manufacturer, distributor, system integrator, etc. The EOL is typically when the vender, etc. ceases marketing, selling, or sustaining the product.

### BRIEF DESCRIPTION OF THE DRAWINGS

The following detailed description references the drawings, wherein:
FIG. 1 is a block diagram of an example system for EOL notification generation;
FIG. 2 is a flowchart of an example method for EOL notification generation;
FIG. 3 is a flowchart of another example method for EOL notification generation; and
FIG. 4 is a block diagram of an example system for EOL notification generation.

### DETAILED DESCRIPTION

Milestones in a product life cycle may include (1) the general availability phase (GA), during which a product is available for purchase and support for the product is provided; (2) end of life announcement phase (EOLA), during which a date upon which the product will no longer be supported is provided, although the product may still be available for purchase; (3) last order date (LOD), which may be the last date that a particular product may be purchases; and (4) end-of-life (EOL), the date upon which the product will no longer be supported. As used herein support may include software updates, security updates, maintenance, warranty support, etc.

EOL of devices, such as routers, switches, servers, storage, etc., may be a concern for administrators managing the devices. As more small and medium enterprises (SME) continue moving towards devices that utilize cloud services, outdated device replacement for devices that are no longer supported may become a significant concern. These outdated devices may require replacement with the new models in order to ensure continuation of service/operation. Moreover, outdated devices can possess security threats for devices on the entire network if the outdated devices are not replaced on time. If administrators can be informed about EOL for a particular device in advance of the EOL date, networks can be re-designed more efficiently with minimal downtime.

Currently administrators may have to manually go and check corresponding websites to determine when devices will become EOL. This problem may be especially burdensome for an administrator of networks with large numbers of devices, each having different EOL dates. If an administrator forgets to check, makes a mistake or the EOL changes (among other potential mishaps), the network could remain out of dates.

The systems and methods for EOL notification generation describe numerous methods for generating EOL notifications. In one aspect, which may be used for an on premise network management system (i.e. a network that is not managed in the cloud) and/or a cloud based network management system, a device may proactively check for the EOL threshold and generate notifications, which may be in the form of Simple Network Management Protocol (SNMP) traps. Before generating the traps, a device may access a cloud inventory system to check if there is a change in EOL dates. If the inventory system is not reachable, the device may generate a notification based on the original EOL information. One aspect may utilize notifications on a network management system (NMS) originating from a cloud deployed inventory system. The NMS can be on premise or in cloud. The NMS may periodically communicate with the cloud inventory system. The notifications can be of different severity levels depending on the EOL date.

An example system for EOL notification generation is presented. The system may include a processor and a memory storing an end of life information, the end of life information indicating a date when the network device will no longer be supported. The memory may comprise instructions executable by the processor to determine, based on the end of life information, that an end of life threshold has been reached, wherein the end of life threshold is a period of time before the date when the network device will no longer be supported, generate a notification that the end of life threshold has been reached, wherein the notification includes the date when the network device will no longer be supported and broadcast the notification on a network accessible by the network device.

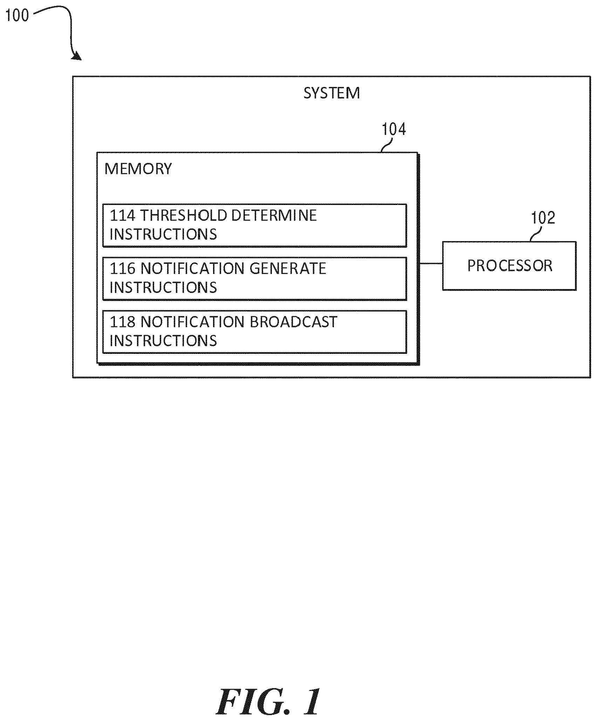

FIG. 1 is a block diagram of an example system 100 for EOL notification generation. System 100 may be incorporated in a networking device, such as a network switch (e.g., an Ethernet switch), router, etc. System 100 may include a processor 102 and a memory 104 that may be coupled to each other through a communication link (e.g., a bus). Processor 102 may include a Central Processing Unit (CPU) or another suitable hardware processor. In some examples, memory 104 stores machine readable instructions executed by processor 102 for system 100. Memory 104 may include any suitable combination of volatile and/or non-volatile memory, such as combinations of Random Access Memory (RAM), Read-Only Memory (ROM), flash memory, and/or other suitable memory. Memory 104 may also include a random access non-volatile memory that can retain content when the power is off.

The memory may store end of Life (EOL) information. The EOL information may include information about the general availability phase, end of life announcement, last order date, end of life, etc. For example, the EOL information may indicate a date when the device will no longer be supported. In some aspects, the EOL information, include the date, may be put into the memory of the system 100 before the device is deployed and/or provisioned into a network environment. For example, the EOL information, including the date, may be burned into the memory of the system 100 by the manufacturer of the device, such as during the manufacturing process. The EOL information, including the date, may be part of a system image which is loaded onto the system 100.

Memory 104 stores instructions to be executed by processor 102 including instructions for and/or other components. According to various implementations, user interest and relationship determination system 100 may be implemented in hardware and/or a combination of hardware and programming that configures hardware. Furthermore, in FIG. 1 and other Figures described herein, different numbers of components or entities than depicted may be used.

Processor 102 may execute threshold determine instructions 114 to determine, based on the end of life information, that an end of life threshold has been reached. The end of life threshold may be a period of time before the date when the network device will no longer be supported. Processor 102 may execute notification generate instructions 116 to generate a notification that the end of life threshold has been reached, wherein the notification includes the date when the network device will no longer be supported. Processor 102 may execute notification broadcast instructions 118 to broadcast the notification on a network accessible by the network device. The notification may be broadcast using a Simple Network Management Protocol (SNMP) trap, a Representational State Transfer notification (REST), etc. The device may also include an EOL specific Management Information Base for the Simple Network Management Protocol trap.

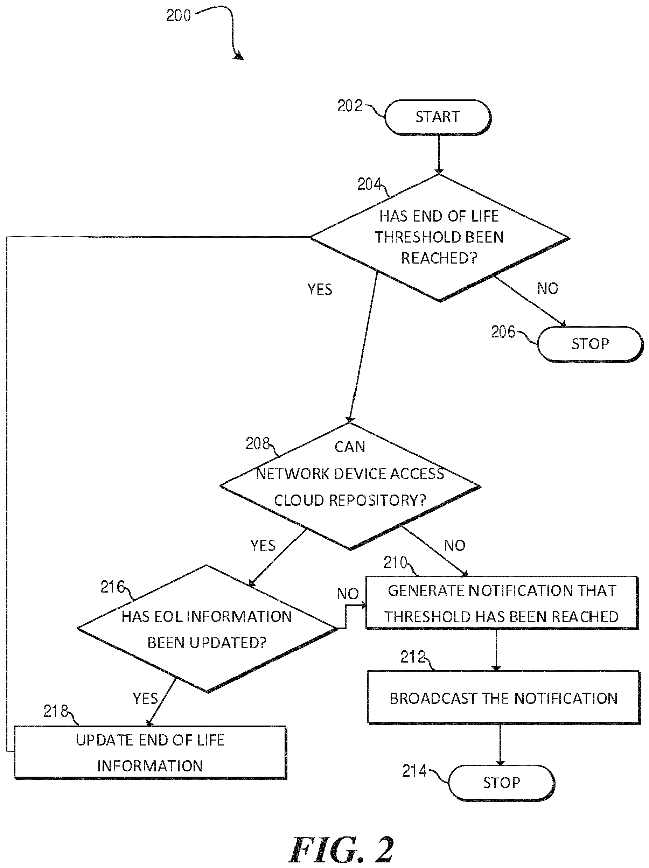

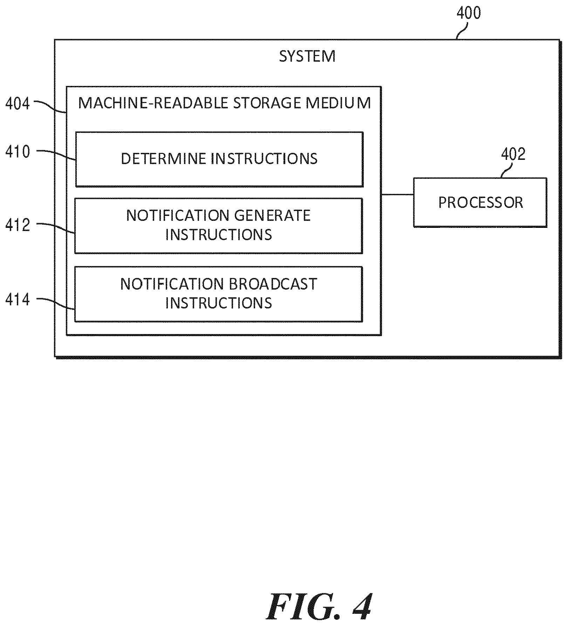

FIG. 2 is a flowchart of an example method 200 for EOL notification generation. Method 200 may be used, for example, in aspects where a device, such as system 100 described above in reference to FIG. 1, is managed in an on premise (i.e. non-cloud based) network management system. Method 200 may be described below as being executed or performed by a system, for example, system 100 of FIG. 1, or system 400 of FIG. 4 described below. Other suitable systems and/or computing devices may be used as well. Method 200 may be implemented in the form of executable instructions stored on at least one machine-readable storage medium of the system and executed by at least one processor of the system. The processor may include a Central Processing Unit (CPU) or another suitable hardware processor. The machine-readable storage medium may be non-transitory. Method 200 may be implemented in the form of electronic circuitry (e.g., hardware). At least one block of method 200 may be executed substantially concurrently or in a different order than shown in FIG. 2. Method 200 may include more or less blocks than are shown in FIG. 2. Some of the blocks of method 200 may, at certain times, be ongoing and/or may repeat.

Method 200 may start at block 202 and continue to block 204, where the method 200 may include determining that an end of life threshold for a device has been reached. The end of life threshold may be a period of time before the date when the device will no longer be supported. The end of life threshold may be a certain period of time before that date arrives. The end of life threshold may set by the manufacturer of the device, and/or may be set by an administrator of the device during setup, provisioning of the device, etc. The end of life threshold may be used to give the administrator some lead time to obtain a replacement device, so that the original device is no longer being used in the network by the time the EOL date arrives. In some examples, the end of life date and/or end of life threshold may correspond to the EOLA, LOD, etc.

The device itself may be programmed to determine when the end of life threshold is met, based on a date put into the memory of the device prior to deployment of the device in a network environment. In some aspects, the device may periodically check to determine if the end of life threshold has been met. For example, the date may be put into the memory by the manufacturer. The device may have an internal clock that tracks the current date, time, etc., and when the device determines that the current time and date are within the end of life threshold (as described in block 204), the device may continue with the method 200. If the device determines that the end of life threshold has not been reached (NO branch of block 204), then the method 200 may proceed to block 206 where the method may end.

If it is determined that the device threshold has been reached, (YES branch of block 204), then the method may proceed to block 208 where the method 200 may include determining whether the device can access a cloud repository. The cloud repository may be, for example, an inventory service that includes various information on devices. This information may include, for example, date of purchase, identification number, serial number, Mac address, Model number and end of life information. The device itself may also store one or more of these information types. The device may provide one or more pieces of identifying information to the cloud repository to identify the device and determine if the cloud repository includes updated information on the device.

For various reasons, a device may not be able to access the cloud repository. For example, certain environments may be provisioned such that certain devices cannot access other networks. This may be, for example, for security reasons. In some networks, devices may not have access to cloud services because administrators to not want to pay for access to the cloud repository. In some aspects, the cloud repository may be out of service when the device determines if the cloud repository can be accessed. In other aspects, the cloud repository may be unreachable because of a network error, etc. Of course, these are for illustrative purposes, and devices may be not able to access cloud repositories for a variety of reasons.

If it is determined that the device cannot access the cloud repository (NO branch of block 208), then at block 210, the method 200 may include generating a notification that the end of life threshold has been reached and at block 212 the method may include broadcasting the notification. In some aspects, generating and broadcasting the notification may include generating a Simple Network Management Protocol (SNMP) trap and/or a Representational State Transfer notification (REST). The device may also include an EOL specific Management Information Base for the Simple Network Management Protocol trap. Broadcasting the information may include sending an alert to a NMS, network administrator, etc. In some aspects, the alert may be a text based alert with the end of life data, end of life threshold, etc.

SNMP may consists of three key components: managed devices, agents, and network-management systems (NMS). A managed device (such as system 100 illustrated in Fig. 1) may be a node that has an SNMP agent and resides on a managed network. These managed devices may be, for example, routers, access servers, switches and bridges, hubs, computer hosts, printers, etc. An agent is a software module residing within a device. This agent may translates information into a compatible format with SNMP. A NMS may runs monitoring applications.

SNMP traps enable an agent (switches, routers, servers, etc.) to notify the management station of significant events, such as an end of life notification, by way of an unsolicited SNMP message. In order for a management system to understand a trap sent to it by an agent, the management system may use an object identifier (OID). An OID is a unique identifier for a managed objects in a Management Information Base (MIB) hierarchy. The OID may be depicted as a tree whose nodes are assigned by different organizations. A MIB is a collection of information which is organized hierarchically. The various pieces of information may be accessed via a protocol such as SNMP. There are two types of MIBs: scalar objects and tabular objects. Scalar objects define a single object instance whereas tabular objects define multiple related object instances grouped in MIB tables.

Accordingly, in order to interpret an SNMP trap, such as a trap for an EOL notification), a network management system may have the MIB for that trap loaded in memory. The correct MIB provides the correct OID information so that the NMS can interpret the traps received and process that information. In some aspects where the NMS is a cloud based NMS, Representational State Transfer (REST) notifications may be sent by the device to the NMS instead of SNMP trap.

Turning again to blocks 210 and 212, the method may include defining a MIB for EOL messages. The MIB may have an OID for EOL messages and may define the EOL date, EOL threshold value, etc. The MIB may also be available in the NMS. Once the EOL threshold value has been reached, the SNMP protocol running in the switch may trigger a trap using the MIB and that trap will be send to the NMS. The method may then proceed to block 214, where the method may end.

If it is determined that the device can access the cloud repository (YES branch of block 208), then at block 216, the method may include determining whether the EOL information has been updated. In aspects where the device has access to cloud repository, the EOL information stored in the MIB may be accessed and cross verified with the EOL information stored in the cloud inventory system. If it is determined that the EOL information has not been updated (NO branch of block 216), then the method may proceed to block 210 and proceed as described above. If it is determined that the EOL information has been updated (Yes branch of block 216), then the method may proceed to block 218, where the method may include updating the end of life information. The method may then to proceed to block 204 and proceed as described above.

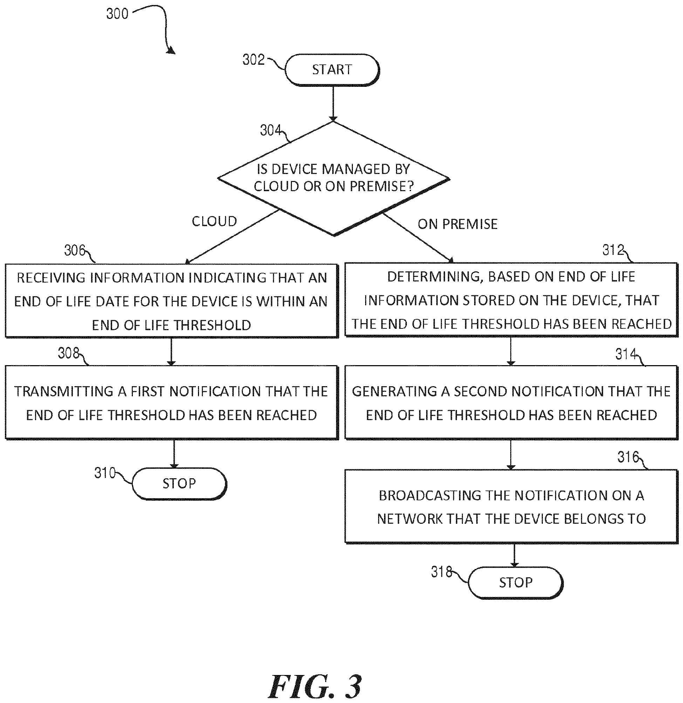

FIG. 3 is a flowchart of an example method 300 for EOL notification generation. Method 300 may be described below as being executed or performed by a system, for example, system 100 of FIG. 1, or system 400 of FIG. 4 described below. Other suitable systems and/or computing devices may be used as well. Method 300 may be implemented in the form of executable instructions stored on at least one machine-readable storage medium of the system and executed by at least one processor of the system. The processor may include a Central Processing Unit (CPU) or another suitable hardware processor. The machine-readable storage medium may be non-transitory. Method 300 may be implemented in the form of electronic circuitry (e.g., hardware). At least one block of method 300 may be executed substantially concurrently or in a different order than shown in FIG. 3. Method 300 may include more or less blocks than are shown in FIG. 3. For example, one or more of the branches of block 304 may be performed without the determination step of block 304. Some of the blocks of method 300 may, at certain times, be ongoing and/or may repeat.

Method 300 may start at block 302 and continue to block 304, where the method 300 may include determining whether a device is managed by a cloud networking management system or an on premise networking system. If it is determined that the device is managed by a cloud networking management system (CLOUD branch of block 304), the method may proceed to block 306, where the method may include receiving information indicating that an end of life date for the device is within an end of life threshold. Specifically, this information may be received from a cloud database, such as a Cloud based Inventory Application. The cloud database may be managed by a manufacturer, systems integrator, third party, etc. In some aspects, information may be received from multiple cloud databases.

The cloud database may include a variety of information on deployed devices, including information on the date of purchase, serial number, MAC address, Model number, etc. In some aspects, this information is pre-loaded into the cloud database after the products are manufactured. When a device is added to a network, the cloud database may update to include information about the added device. Accordingly, the cloud based NMS may periodically communication with the cloud database in order to determine if any devices deployed on the network have reached the EOL threshold. When the EOL of the device approaches, the cloud database may notify the details to the NMS.

The method may proceed to block 308, where the method may include transmitting a first notification that the end of life threshold has been reached. The NMS may receive this data, process it and generate a notification in the NMS. Notifications can be notified with color codes according to the EOL time frame. In some aspects, the notification may have an option to acknowledge the EOL notification. The method may proceed to block 310, where the method may end.

If it is determined that the device is managed by a on premise NMS system (ON PREMISE branch of block 304), the method may proceed to block 312, where the method may include determining, based on end of life information stored on the device, that the end of life threshold has been reached. This block may be similar to block 204 described above in reference to FIG. 2. The date may be burned in the memory prior to deployment of the network device, such as, for example, by the manufacturer of the network device.

The method may proceed to block 314, where the method may include generating a second notification that the end of life threshold has been reached and block 316, where the method may include broadcasting the notification on a network that the device belongs to. The notification may be broadcast using a Simple Network Management Protocol (SNMP) trap, a Representational State Transfer notification (REST), etc. The device may also include an EOL specific Management Information Base for the Simple Network Management Protocol trap. Blocks 314 and 316 may be similar to blocks 210 and 212, respectively, described above in reference to FIG. 2. The method may proceed to block 318, where the method may end.

FIG. 4 is a block diagram of an example system 400 for EOL notification generation. System 400 may be similar to system 100 of FIG. 1, for example. In the example illustrated in FIG. 4, system 400 includes a processor 402 and a machine-readable storage medium 404. Although the following descriptions refer to a single processor and a single machine-readable storage medium, the descriptions may also apply to a system with multiple processors and multiple machine-readable storage mediums. In such examples, the instructions may be distributed (e.g., stored) across multiple machine-readable storage mediums and the instructions may be distributed (e.g., executed by) across multiple processors.

Processor 402 may be at least one central processing unit (CPU), microprocessor, and/or other hardware devices suitable for retrieval and execution of instructions stored in machine-readable storage medium 404. In the example illustrated in FIG. 4, processor 402 may fetch, decode, and execute instructions 410, 412 and 414 to perform EOL notification generation. Processor 402 may include at least one electronic circuit comprising a number of electronic components for performing the functionality of at least one of the instructions in machine-readable storage medium 404. With respect to the executable instruction representations (e.g., boxes) described and shown herein, it should be understood that part or all of the executable instructions and/or electronic circuits included within one box may be included in a different box shown in the figures or in a different box not shown.

Machine-readable storage medium 404 may be any electronic, magnetic, optical, or other physical storage device that stores executable instructions. Thus, machine-readable storage medium 404 may be, for example, Random Access Memory (RAM), an Electrically-Erasable Programmable Read-Only Memory (EEPROM), a storage drive, an optical disc, and the like. Machine-readable storage medium 404 may be disposed within system 400, as shown in FIG. 4. In this situation, the executable instructions may be "installed" on the system 400. Machine-readable storage medium 404 may be a portable, external or remote storage medium, for example, that allows system 400 to download the instructions from the portable/external/remote storage medium. In this situation, the executable instructions may be part of an "installation package". As described herein, machine-readable storage medium 404 may be encoded with executable instructions for context aware data backup. The machine-readable storage medium may be non-transitory.

Referring to FIG. 4, determine instructions 410, when executed by a processor (e.g., 402), may cause system 400 to determine, by a network device, based on the end of life information stored on the network device, that an end of life threshold has been reached. The end of life threshold may be a period of time before a date when the network device will no longer be supported by, for example, a manufacturer, software developer, OEM, systems integrator, third party company, etc. The date may be burned in the memory prior to deployment of the network device, such as, for example, by the manufacturer of the network device. Notification generate instructions 412, when executed by a processor (e.g., 402), may cause system 400 to generate a notification that the end of life threshold has been reached. The notification may include the date when the network device will no longer be supported. Notification broadcast instructions 414, when executed by a processor (e.g., 402), may cause system 400 to broadcast the notification on a network accessible by the network device. The notification may be broadcast using a Simple Network Management Protocol (SNMP) trap, a Representational State Transfer notification (REST), etc. The device may also include an EOL specific Management Information Base for the Simple Network Management Protocol trap.

The foregoing disclosure describes a number of examples for EOL notification generation. The disclosed examples may include systems, devices, computer-readable storage media, and methods for EOL notification generation. For purposes of explanation, certain examples are described with reference to the components illustrated in FIGS. 1-4. The functionality of the illustrated components may overlap, however, and may be present in a fewer or greater number of elements and components. Further, all or part of the functionality of illustrated elements may co-exist or be distributed among several geographically dispersed locations. Further, the disclosed examples may be implemented in various environments and are not limited to the illustrated examples.

Further, the sequence of operations described in connection with FIGS. 1-4 are examples and are not intended to be limiting. Additional orfewer operations or combinations of operations may be used or may vary without departing from the scope of the disclosed examples. Furthermore, implementations consistent with the disclosed examples need not perform the sequence of operations in any particular order. Thus, the present disclosure merely sets forth possible examples of implementations, and many variations and modifications may be made to the described examples.

## Claims

1. A network device comprising:
a processor;
a memory storing an end of life information, the end of life information indicating a date when the network device will no longer be supported;
the memory comprising instructions executable by the processor to:
determine, based on the end of life information, that an end of life threshold has been reached, wherein the end of life threshold is a period of time before the date when the network device will no longer be supported;
generate a notification that the end of life threshold has been reached, wherein the notification includes the date when the network device will no longer be supported; and
broadcast the notification on a network accessible by the network device.

2. The network device of claim 1, wherein the date is burned in the first memory prior to deployment of the network device.

3. The network device of claim 1, wherein the date is burned in the first memory by the manufacturer of the network device.

4. The network device of claim 1, wherein the second memory comprises instructions executable by the processor to:
determine that network device can access a cloud inventory repository;
determine, based on information associated with the network device stored in the cloud inventory repository, that the date has been updated; and
update the end of life information based on the updated date.

5. The network device of claim 1, wherein the second memory comprises instructions executable by the processor to:
determine that the network device can access a cloud inventory repository; and
determine, based on information associated with the network device stored in the cloud inventory repository, that the date has been not updated.

6. The network device of claim 1, wherein the second memory comprises instructions executable by the processor to:
determine, at a time of deployment of the network device, that the network device will not be managed by a cloud based network management system.

7. The network device of claim 1, wherein the notification is broadcast using a Simple Network Management Protocol trap.

8. The network device of claim 1, wherein the notification is broadcast using a Representational State Transfer notification.

9. A non-transitory machine-readable storage medium encoded with instructions, the instructions executable by a processor of a system to cause the system to:
determine, by a device, based on the end of life information stored on the device, that an end of life threshold has been reached, wherein the end of life threshold is a period of time before a date when the device will no longer be supported;
generate a notification that the end of life threshold has been reached, wherein the notification includes the date when the device will no longer be supported; and
broadcast the notification on a network accessible by the device.

10. The non-transitory machine-readable storage medium of claim 9, wherein the instructions executable by the processor of the system cause the system to
determine, at the time of deployment of the network device, that the network device will be managed by an on premise management system.

11. A method comprising:
determining, at the time of deployment of a device, whether the device will be managed by a cloud based network management system or an on premise network management system;
wherein, if it is determined that the device will be managed by the cloud based network management system:
receiving, from a cloud inventory repository, information indicating that an end of life date for the device is within an end of life threshold, wherein the end of life date indicates when the device will no longer be supported and the end of life threshold is a period of time before the date when the device will no longer be supported; and
transmitting, from the cloud based network management system, a first notification that the end of life threshold has been reached, wherein the notification includes the date when the device will no longer be supported and an identification of the device,
wherein, if it is determined that the device will be managed by the on premise network management system:
determining, based on end of life information stored on the device, that the end of life threshold has been reached;
generating a second notification that the end of life threshold has been reached, wherein the second notification includes the date when the device will no longer be supported and an identification of the device; and
broadcasting the second notification on a network that the device belongs to.

12. The method of claim 11, wherein the date is burned in a memory of the device prior to deployment of the device.

13. The method of claim 11, comprising:
determining that the device can access the cloud inventory repository;
determining, based on information associated with the device stored in the cloud inventory repository, that the date has been updated; and
updating the end of life information based on the updated date.

14. The method of claim 11, wherein the second notification is broadcast using a Simple Network Management Protocol trap.

15. The method of claim 14, wherein the device includes an EOL specific Management Information Base for the Simple Network Management Protocol trap.
